Europäisches Patentamt

European Patent Office

Office européen des brevets

(11) Veröffentlichungsnummer: **0 303 721**
**A1**

# (12) EUROPÄISCHE PATENTANMELDUNG

(21) Anmeldenummer: **87111927.7**

(22) Anmeldetag: **18.08.87**

(51) Int. Cl.4: **G06K 17/00**

(43) Veröffentlichungstag der Anmeldung:
**22.02.89 Patentblatt 89/08**

(84) Benannte Vertragsstaaten:
**AT BE CH DE ES FR GB GR IT LI LU NL SE**

(71) Anmelder: **BDT Büro- und Datentechnik GmbH**
**Saline 29**
**D-7210 Rottweil 1(DE)**

(72) Erfinder: **Steinhilber, Friedhelm**
**Saline 29**
**D-7210 Rottweil(DE)**

(74) Vertreter: **Patentanwälte Dipl.-Ing. Klaus Westphal Dr. rer. nat. Bernd Mussgnug Dr. rer.nat. Otto Buchner**
**Waldstrasse 33**
**D-7730 VS-Villingen(DE)**

(54) Verfahren und Vorrichtung zur Ausgabe von fernübertragenen Informationen.

(57) Um die von einem Ausgabeendgerät aufgezeichneten fernübertragenen Informationen nach gewissen Kriterien sortiert abzulegen, ist dem Ausgabeendgerät ein Sortiergerät mit mehreren ansteuerbaren Ablagefächern nachgeschaltet. Zusammen mit den fernübertragenen Informationen werden codierte Signale übertragen, die durch eine elektronische Auswerteeinrichtung des Ausgabeendgerätes in die Steuersignale für das Sortiergerät umgewandelt werden.

EP 0 303 721 A1

## Verfahren und Vorrichtung zur Ausgabe von fernübertragenen Informationen

Die Erfindung betrifft ein Verfahren zur Ausgabe von fernübertragenen Informationen gemäß dem Oberbegriff des Patentanspruches 1 sowie eine Vorrichtung zur Durchführung dieses Verfahrens gemäß dem Obergegriff des Patentanspruchs 5.

Zur Fernübertragung von Informationen werden verschiedene Systeme eingesetzt. Beim Fernkopieren erfolgt die Übertragung der Informationen durch analoge Signale über das Fernsprechnetz. Beim Fernschreiben (Telex) und beim Bürofernschreiben (Teletex) erfolgt die Übertragung der Informationen durch digitale Signale über ein gesondertes Netz. Die übertragenen Daten werden durch ein Ausgabeendgerät (Fernkopierer, Fernschreiber oder Textsystem) auf einen Aufzeichnungsträger aufgezeichnet, der von einer Rolle oder blattweise von einem Stapel zugeführt wird. Die blattweise zugeführten oder von der Rolle abgeschnittenen Aufzeichnungsträger werden gestapelt abgelegt.

Die fortlaufende Ablage sämtlicher eingehender Informationen auf einen Stapel macht bei Betrieben mit mehreren Personen oder Abteilungen ein Sortieren nach den jeweiligen Adressaten der jeweiligen Informationen notwendig. Außerdem sind die eingehenden und gemeinsam abgelegten Informationen einem größeren Personenkreis zugänglich, so daß die Vertraulichkeit von Informationen nicht gewährleistet werden kann.

Aus der DE-OS 32 25 828 ist ein Ausgabeendgerät mit einem nachgeschalteten Sortiergerät bekannt, wobei das Sortiergerät mehrere Ablagefächer aufweist, die durch eine elektronische Auswerteeinrichtung des Ausgabeendgerätes angesteuert werden. Das Ausgabeendgerät dient zur Ausgabe der Informationen verschiedener Einrichtungen, z.B. eines Kopiergerätes, eines Computers und eines Datenfernübertragungsgerätes. Die elektronische Auswerteeinrichtung stellt fest, von welcher dieser Einrichtungen die Informationen kommen, die das Ausgabeendgerät aufzeichnet, und steuert das Sortiergerät dementsprechend, so daß die Aufzeichnungsträger jeweils in Ablagefächer des Sortiergerätes gelangen, die der jeweiligen Einrichtungen zugeordnet sind, von der die aufgezeichneten Informationen stammen. Der Datenfernübertragungseinrichtung ist dabei nur eine einzige Gruppe von Ablagefächern des Sortiergerätes zugeordnet, die nacheinander gefüllt werden. Ein Sortieren der Aufzeichnungsträger mit von der Datenfernübertragungseinrichtung stammenden Informationen ist nicht möglich. Die Zuordnung mehrerer Ablagefächer zu der Datenfernübertragungseinrichtung dient ausschließlich der Erhöhung der Kapazität der Ablage.

Die Datenfernübertragung erfolgt bei diesem aus der DE-OS 32 25 828 bekannten System nur zwischen einem jeweils anwählenden Sendegerät und dem Empfängergerät, an welches das Ausgabeendgerät mit dem Sortiergerät angeschlossen ist. Die elektronische Auswerteeinrichtung und die Ansteuerung des Sortiergerätes dient nur dazu, die von dem Empfängergerät der Datenfernübertragung stammenden Aufzeichnungen von den Aufzeichnungen zu trennen, die von anderen Einrichtungen, wie z.B. dem Kopierer oder dem Computer, stammen. Es ist nicht möglich, die über die Datenfernübertragung an das Ausgabeendgerät übermittelten Informationen einem bestimmten von mehreren Empfängern zuzuordnen, die sich gemeinsam dieses Ausgabeendgerätes bedienen.

Aus der DE-OS 32 18 747 ist ein Kopiergerät mit nachgeschaltetem Sortiergerät bekannt, bei welchem entsprechend einer Steuereingabe mehrere Kopien entweder auf die verschiedenen Ablagefächer verteilt oder jeweils in eines der Ablagefächer abgelegt werden. Das Gerät ist nicht als Ausgabeendgerät für eine Datenfernübertragung vorgesehen.

Der Erfindung liegt die Aufgabe zugrunde, ein Verfahren zur Ausgabe von fernübertragenen Informationen zu schaffen, welches es ermöglicht, die über eine Informationsfernübertragungsverbindung von einem Sender einem einzigen Empfängergerät übermittelten Informationen einem bestimmten, vom Sender auswählbaren Empfänger von mehreren sich dieses Empfängergerätes gemeinsam bedienenden Empfängern zuzuordnen, und eine Vorrichtung zur Durchführung dieses Verfahrens anzugeben.

Diese Aufgabe wird mit einem Verfahren der eingangs genannten Gattung erfindungsgemäß gelöst durch die Merkmale des kennzeichnenden Teils des Patentanspruches 1.

Vorteilhafte Ausführungsformen der Erfindung sind in den Unteransprüchen 2 bis 4 angegeben.

Anspruch 5 gibt eine Vorrichtung an, die in vorteilhafter Weise bei der Durchführung des Verfahrens eingesetzt werden kann.

Dabei ist dem anwählbaren Ausgabeendgerät ein Sortiergerät mit mehreren Ablagefächern nachgeschaltet, die in an sich bekannter Weise über Steuersignale ansteuerbar sind, so daß ein dem Sortiergerät zugeführtes Einzelblatt entsprechend dem jeweiligen Steuersignal in ein ausgewähltes Ablagefach abgelegt wird.

Der wesentliche Gedanke der Erfindung besteht darin, mittels der fernübertragenen Informationen automatisch das dem Ausgabeendgerät nachgeschaltete Sortiergerät anzusteuern, so daß der mit diesen Informationen bedruckte Aufzeichnungsträger automatisch dem Ablagefach des Sortiergerätes zugeführt wird, das dem Adressaten der Information zugeordnet ist. Dadurch wird ein Sortieren der eingehenden Informationen nach den verschiedenen Empfängern überflüssig. Der jeweilige Empfänger kann die für ihn bestimmten Informationen jederzeit dem Sortiergerät entnehmen, ohne den gesamten Stapel der eingegangenen Informationen überprüfen zu müssen. Insb. kann die Vertraulichkeit der eingehenden Informationen dadurch gewährleistet werden, daß jeder Empfänger nur die jeweils für ihn bestimmten Informationen entgegennimmt. Hierzu können vorzugsweise die Ablagefächer des Sortiergerätes gesondert verschließbar sein. Nur derjenige, der über den Schlüssel zu dem jeweiligen Ablagefach oder über die Codenummer dieses Ablagefaches verfügt, hat Zugang zu den für ihn eingehenden Informationen.

Zur Ansteuerung des Sortiergerätes ist dem Ausgabeendgerät eine elektronische Auswerteeinrichtung zugeordnet, die die codierten Signale, die den Empfänger charakterisieren und zusammen mit den Informationen fernübertragen werden, in die Steuersignale für das Sortiergerät umsetzt. Der Schaltungsaufbau einer solchen elektronischen Auswerteeinrichtung ergibt sich für den Fachmann ohne weiteres aus der nachfolgend angegebenen Funktion.

Bei einem Fernkopierer, der über das Fernsprechnetz anwählbar ist, kann die Rufnummer selbst als Signal für die Wahl des Ablagefaches verwendet werden. Entweder werden dem Fernkopierer mehrere Rufnummern des Fernsprechnetzes zugeordnet, wobei jede Rufnummer zur Ansteuerung eines anderen Ablagefaches verwendet wird. Ebenso kann dem Fernkopierer nach Art einer Nebenstellenanlage eine Rufnummer mit mehreren Durchwahlnummern für die einzelnen Ablagefächer zugeordnet werden.

Bei Fernschreibern und Bürofernschreibern werden zweckmäßigerweise gewisse Zeichenfolgen am Anfang oder am Ende der übertragenen Informationen hinzugefügt, die in der elektronischen Auswerteeinrichtung entschlüsselt und in die Steuersignale für die Ablagefächer des Sortiergerätes umgesetzt werden.

Selbstverständlich können auch bei der Übertragung durch Fernkopierer gewisse Zeichenfolgen am Anfang oder Ende der übertragenen Informationen zur Ansteuerung der Ablagefächer herangezogen werden. Auch bei Fernübertragung durch Telex oder Teletex ist es möglich, einem Endgerät mehrere Anwahlnummern zuzuordnen, die zu Ansteuerung der verschiedenen Ablagefächer dienen.

## Ansprüche

1. Verfahren zur Ausgabe von fernübertragenen Informationen durch ein anwählbares, die Informationen auf Aufzeichnungsträger aufzeichnendes Ausgabeendgerät, dem ein Sortiergerät mit mehreren Ablagefächern nachgeschaltet ist, die durch eine elektronische Auswerteeinrichtung des Ausgabeendgerätes angesteuert werden, dadurch gekennzeichnet, daß der Anwahlnummer oder der übertragenen Information codierte Signale hinzugefügt werden, welche durch die Auswerteeinrichtung in die Steuersignale für das Sortiergerät umgewandelt werden.

2. Verfahren nach Anspruch 1, wobei die Fernübertragung durch einen Fernkopierer (Telefax) erfolgt, dadurch gekennzeichnet, daß die codierten Signale jeweils Rufnummern des Fernsprechnetzes sind.

3. Verfahren nach Anspruch 1, wobei die Fernübertragung durch einen Fernkopierer (Telefax) erfolgt, durch gekennzeichnet, daß die codierten Signale die Durchwahlnummern einer Nebenstellenanlage sind.

4. Verfahren nach Anspruch 1, wobei die Fernübertragung durch Fernschreiben (Telex) oder Bürofernschreiben (Teletex) erfolgt, dadurch gekennzeichnet, daß die codierten Signale eine der zu übertragenden Information vorangestellte oder angeschlossene Zeichenfolge sind, die elektronisch entschlüsselt wird.

5. Vorrichtung zur Durchführung des Verfahrens nach einem der vorhergehenden Ansprüche, mit einem anwählbaren Ausgabeendgerät und einem diesem nachgeschalteten Sortiergerät mit durch eine elektronische Auswerteeinrichtung des Ausgabeendgerätes ansteuerbaren Ablagefächern, dadurch gekennzeichnet, daß die Ablagefächer des Sortiergerätes jeweils gesondert verschließbar sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 225 828 (CANON K.K.) <br> * Zusammenfassung * <br> --- | 1 | G 06 K 17/00 |
| A | WO-A-8 703 540 (MERCANTE INTERNATIONAL) <br> * Zusammenfasung; Figur 1 * <br> --- | 1,4 | |
| A | US-A-4 532 554 (S.F. SKALA) <br> * Zusammenfassung * <br> ----- | 1 | |

| | RECHERCHIERTE SACHGEBIETE (Int. Cl.4) |
|---|---|
| | G 06 K 17/00 |

Der vorliegende Recherchenbericht wurde für alle Patentansprüche erstellt

| Recherchenort | Abschlußdatum der Recherche | Prüfer |
|---|---|---|
| BERLIN | 11-04-1988 | ZOPF K |

EPO FORM 1503 03.82 (P0403)